# EUROPÄISCHE PATENTSCHRIFT

(11) **EP 2 906 850 B1**
(45) Veröffentlichungstag und Bekanntmachung des Hinweises auf die Patenterteilung: **06.05.2020**
(21) Anmeldenummer: 13734040.2
(22) Anmeldetag: 01.07.2013
(51) Int. Cl.: F16F 13/14

(54) **BUCHSENLAGER**
SLEEVE BEARING
PALIER À COUSSINETS

(30) Priorität: 31.07.2012 DE 102012213440
(43) Veröffentlichungstag der Anmeldung: 19.08.2015
(73) Patentinhaber: BOGE Elastmetall GmbH, 49401 Damme (DE); Audi AG, 85045 Ingolstadt (DE)
(72) Erfinder: LUDWIG, Volker, 26197 Großenkneten (DE); LOHEIDE, Stefan, 49134 Wallenhorst (DE); CONRAD, Thomas, 91757 Treuchtlingen (DE)
(74) Vertreter: Bossmeyer, Jörg Peter
(86) Internationale Anmeldenummer: PCT/EP2013/063797
(87) Internationale Veröffentlichungsnummer: WO 2014/019783

(56) Entgegenhaltungen:
- EP-A1- 0 411 997
- EP-A1- 0 641 955
- FR-A1- 2 904 075
- JP-A- H08 177 951
- US-A- 5 040 774
- US-A1- 2006 006 592

## Beschreibung

Die vorliegende Erfindung betrifft ein Buchsenlager zur Aufnahme in einer Außenhülse. Solche Buchsenlager sind zur schwingungsdämpfenden Lagerung von Bauteilen, insbesondere über Zapfen bzw. Wellen allgemein bekannt.

Die vorliegende Erfindung betrifft insbesondere ein Buchsenlager mit den oberbegrifflichen Merkmalen von Anspruch 1. Ein solches Buchsenlager ist aus der FR 2 904 075 A1 bekannt.

Ein aus der DE 10 2006 052 251 A1 bekanntes Buchsenlager hat einen Lagerkörper aus einem elastischen Material, welcher ein sich in axialer Richtung des Buchsenlagers erstreckendes Innenteil in sich aufnimmt. In dieses Innenteil wird ein Befestigungselement eines elastisch zu lagernden Maschinenteils, insbesondere einer Fahrwerkskomponente oder eines Fahraggregats aufgenommen. Dieses vorbekannte Buchsenlager ist eine Hydrobuchse und hat dementsprechend wenigstens zwei Kammern zur Aufnahme eines Dämpfungsmittels sowie einen mit den zwei Kammern kommunizierenden Kanal, durch welche das hydraulische Dämpfungsmittel fließen kann. Dabei erfolgt eine hydraulische Dämpfung innerhalb des Buchsenlagers durch Umlagern der Hydraulikflüssigkeit von einer Kammer in eine andere. Dieser Kanal kann Teil des Buchsenlagers sein. Der Kanal kann aber ebenso gut ganz oder teilweise durch die Außenhülse ausgebildet sein, ich welche das Buchsenlager eingesetzt wird.

Des Weiteren ist bei dem Stand der Technik ein den Lagerkörper umschließender Käfig vorgesehen. Dieser Käfig dient der Stabilisierung des Buchsenlagers und insbesondere zur Abstützung des Lagerkörpers gegenüber der das Buchsenlager aufnehmenden Außenhülse.

Der Einbau des Buchsenlagers in die Außenhülse erfolgt üblicherweise mit einer gewissen Kompression. Durch diese Kompression werden die Steifigkeit und die Lebensdauer des Buchsenlagers beeinflusst. Bei dem aus dem Stand der Technik bekannten Buchsenlager führt das Einpressen des Buchsenlagers in die Außenhülse zu einer Verspannung des elastischen Materials. Mit Blick auf eine möglichst hohe Lebensdauer sollte das Elastomer keinen Zugkräften ausgesetzt werden. So ist man bisweilen bemüht, eine Druckspannung in das Lager einzuprägen, so dass ein gewisses Druckspannungsreservoir in dem Buchsenlager von vorne herein vorgesehen ist. Allzuhohe Druckkräfte wirken indes auch auf den Käfig, und können diesen verformen, was unerwünscht ist. So führt insbesondere eine Verformung des Käfigs dazu, dass dieser seine Rundheit verliert. Infolge dessen kann es zu Undichtigkeiten zwischen dem Käfig und einer den Käfig aufnehmenden Buchse kommen. Die Kompression wird dabei in der Regel durch den Käfig vermittelt. Somit ist es nicht möglich, die Dämpfungseigenschaften des Buchsenlagers richtungsabhängig zu kalibrieren.

Der vorliegenden Erfindung liegt das Problem zugrunde, ein Buchsenlager der eingangs genannten Art mit erhöhter Lebensdauer anzugeben.

Zur Lösung dieses Problems wird gemäß der vorliegenden Erfindung ein Buchsenlager mit den Merkmalen nach Anspruch 1 geschaffen. Bei diesem Buchsenlager ist der Käfig aus mindestens zwei Käfigteilen gebildet, deren Abstand in radialer Richtung veränderbar ist, wobei ein zwischen den Käfigteilen vorgesehener Stoßbereich abgedichtet ist.

Wie bei dem Stand der Technik umschließt auch der Käfig bei dem erfindungsgemäßen Buchsenlager den Lagerkörper im Wesentlichen umfänglich. Dabei bildet der Käfig an gegenüberliegenden Seiten üblicherweise eine Anlagefläche für die Abstützung des Innenteiles aus. Diese Anlagefläche ist üblicherweise in axialer Richtung durchgehend an dem Käfig ausgeformt und zwar an zwei sich üblicherweise planar gegenüberliegenden, parallel zueinander erstreckenden Flächen. Der dazwischen liegende Bereich wird üblicherweise zur Ausbildung der Kammern genutzt. Dabei haben die Kammern üblicherweise sich gegenüberliegende Fenster, die axial durch ringsegmentförmige Schenkel begrenzt sind, die durch den bzw. die Käfigteile gebildet sind. Durch diese ringsegmentförmigen Schenkel wird an dem Buchsenlager eine in Umfangsrichtung umlaufende Abdichtung an den axialen Enden des Buchsenlagers ausgebildet, so dass dieses in ein Lagerauge oder eine Lagerhülse unter Einschluss der Kammern eingesetzt werden kann.

Bei dem erfindungsgemäßen Buchsenlager ist der Käfig zumindest aus zwei Käfigteilen gebildet, deren radialer Abstand veränderbar ist. Dementsprechend kann der Abstand der den Käfig ausbildenden Käfigteile beim Einbau desselben in eine Hülse oder ein Lagerauge verändert und damit das Buchsenlager kalibriert werden, ohne dass das den Käfig ausbildende Material einer übermäßigen Beanspruchung ausgesetzt ist. So lässt sich die Steifigkeit des Buchsenlagers einstellen. Die Lebensdauer des Buchsenlagers wird indes verbessert, da insbesondere das den Käfig ausformende Material keinen erheblichen Eigenspannungen bzw. Verformungen in der Einbausituation unterliegt. Durch den geteilten Käfig ist es in erhöhtem Maße möglich, das Elastomer unter Druckspannung zu setzen, so dass dieses auch bei extremen Verformungen innerhalb des Elastomerlagers weniger stark eventuellen Zugspannungen ausgesetzt ist. Das Buchsenlager weist dementsprechend eine erhöhte Lebensdauer auf. Als Käfig ist dabei ein in der Regel den Lagerkörper vollumfänglich einschließendes Bauteil aus einem steiferen Material als das den Lagerkörper ausbildende Material zu verstehen. Der Lagerkörper ist vorzugsweise aus Elastomer ausgebildet. Aluminium, Stahl und/oder Kunststoff sind für den Käfig und das Innenteil bevorzugte Materialien.

Bei dem erfindungsgemäßen Buchsenlager sind indes die Käfigteile in ihrem Stoßbereich gegeneinander abgedichtet, so dass in dem Buchsenlager enthaltene hydraulische Flüssigkeit, die der Dämpfung des Lagers dient, nicht über den Stoßbereich austreten kann.

Die Abdichtung kann dabei auf unterschiedliche Weise verwirklicht sein. So wird gemäß einer bevorzugten Weiterbildung der vorliegenden Erfindung vorgeschlagen, die Käfigteile über das den Lagerkörper ausbildende Material miteinander zu verbinden, indes über dieses Material auch relativ beweglich zueinander zu halten. Das elastische Material ist üblicherweise ein Elastomer, welches aufgrund seiner elastischen Eigenschaften eine gewisse Beweglichkeit der Käfigteile relativ zueinander zulässt. Bei dieser Ausgestaltung ist der Käfig über das den Lagerkörper ausformende elastische Material üblicherweise zu einer Einheit gefügt. Die einzelnen Käfigteile lassen sich üblicherweise nicht separat handhaben.

Bei einer alternativen Ausgestaltung, bei welcher durchaus die Käfigteile noch bis zum Einbau als separate Elemente handhabbar sind, ist zumindest eine von im Stoßbereich vorgesehenen Stoßflächen der Käfigteile mit einer Dichtung versehen. Im Einbauzustand und nach Kalibrieren des Buchsenlagers bewirkt diese Dichtung eine flüssigkeitsdichte Abdichtung der Lagerteile in ihrem Stoßbereich, so dass keine Hydraulikflüssigkeit austreten kann. Die Dichtung kann dabei aus dem den Lagerkörper ausformenden elastischen Material, d.h. insbesondere einem Elastomer gebildet sein.

Bei einer alternativen Ausgestaltung kann der Stoßbereich auch durch eine die Kammer abdeckende Kammerabdeckung abgedichtet sein. Üblicherweise wird jede Kammer in axialer Richtung von einer Kammerabdeckung bedeckt und definiert. Diese Kammerabdeckung bildet bei der bevorzugten Ausgestaltung die Abdichtung aus. Dabei ist darauf hinzuweisen, dass die Abdichtung der Käfigteile nach der vorliegenden Erfindung zumindest derart ausgebildet sein muss, dass im Einbauzustand kein Dämpfungsmittel aus den Kammern austreten kann. Folglich ist für die Abdichtung des Stoßbereiches bei der vorliegenden Erfindung insbesondere die Abdichtung insofern bedeutsam, als diese gegenüber den Kammern erfolgt. Sofern eine solche Abdichtung gegenüber der das Dämpfungsmittel enthaltende Kammer im Einbauzustand gewährleistet ist, können andere Segmente des Stoßbereiches durchaus ohne Abdichtung verwirklicht sein.

Bei der zuvor beschriebenen Weiterbildung ist die Kammerabdeckung üblicherweise im Stoßbereich geschlitzt ausgebildet. Der Schlitz erstreckt sich dabei von dem Stoßbereich radial nach innen hin zu dem Innenteil. Der Schlitz ist aber üblicherweise in dieser Weise nur geringfügig in der Kammerabdeckung ausgeformt, und zwar derart, dass nach dem Einbauen des Buchsenlagers, d.h. dem Kalibrieren die den Schlitz zunächst begrenzenden Flächen der Kammerabdeckung dichtend gegeneinander bzw. übereinander gelegt sind. Die Abdichtung kann dabei auch durch eine Verbindung der den Schlitz begrenzenden Ränder, beispielsweise durch Kleben erfolgen.

Schließlich wird gemäß einer alternativen Ausgestaltung der vorliegenden Erfindung wenigstens ein den Käfig außenumfänglich umgebender Dichtring vorgeschlagen. Dieser Dichtring umschließt üblicherweise vollumfänglich den aus den Käfigteilen gebildeten Käfig und dichtet den Stoßbereich nach außen ab. Der Dichtring kann als separates Bauteil aufgebracht und mit dem Käfig form- und/oder kraft- und/oder stoffschlüssig verbunden sein. Die Verbindung kann unmittelbar an dem Käfig bzw. mittelbar an einem den Käfig überziehenden Überzug erfolgen. Bei einer formschlüssigen Verbindung ist besagter Dichtring üblicherweise in einer Nut und zwischen zwei radial umlaufenden ringförmigen Vorsprüngen des Käfigs angeordnet.

Gemäß einer weiteren bevorzugten Ausgestaltung der vorliegenden Erfindung ist der Lagerkörper innerhalb der Lagerschalen, d.h. vorzugsweise in dem zuvor erwähnten Grund in radialer Richtung abgestützt und liegt im Stoßbereich der Käfigteile gegenüber diesen schalenförmigen Käfigteilen frei. Der Stoßbereich der beiden Käfigteile liegt dabei üblicherweise mittig zwischen den einander gegenüberliegenden und durch jeweils die Anlageflächen der Lagerschalen für den Lagerkörper. Diese Ausgestaltung erlaubt ein Zusammendrücken der Käfigteile beim Einbau in die Außenhülse bei überschaubarem Kraftaufwand. Mit erhöhter Druckspannung lässt sich die Steifigkeit in Druckrichtung, d.h. das Abfangen von Belastungen rechtwinklig auf die Anlagefläche erhöhen, wohingegen die Steifigkeit in Schubrichtung, d.h. in einer Richtung rechtwinklig zu der Druckrichtung unverändert bleiben. Sowohl die Druckrichtung als auch die Schubrichtung liegen dabei in einer Ebene, die rechtwinklig von der Längsachse des Innenteiles geschnitten wird. Es handelt sich dementsprechend um eine Querschnittsebene des Buchsenlagers.

Gemäß der vorliegenden Erfindung bilden die Käfigteile an gegenüberliegenden axialen Enden und auf Höhe der zwei einander gegenüberliegenden Kammern ringsegmentförmige Schenkel aus, die dichtend zusammenwirken. Die Abdichtung erfolgt hier mit Blick darauf, dass die Kammern im Stoßbereich, d.h. an den freien Enden der ringsegmentförmigen Schenkel abgedichtet sind.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Draufsicht auf das Ausführungsbeispiel;
- Fig. 2: eine Draufsicht auf das Ausführungsbeispiel;
- Fig. 3: eine Querschnittansicht auf ein alternatives Ausführungsbeispiel vor Einbau;
- Fig. 4: die Ansicht nach Figur 3 für das dort gezeigte Ausführungsbeispiel im Einbauzustand und
- Fig. 5: eine Draufsicht auf einen Stoßbereich eines dritten Ausführungsbeispiels.

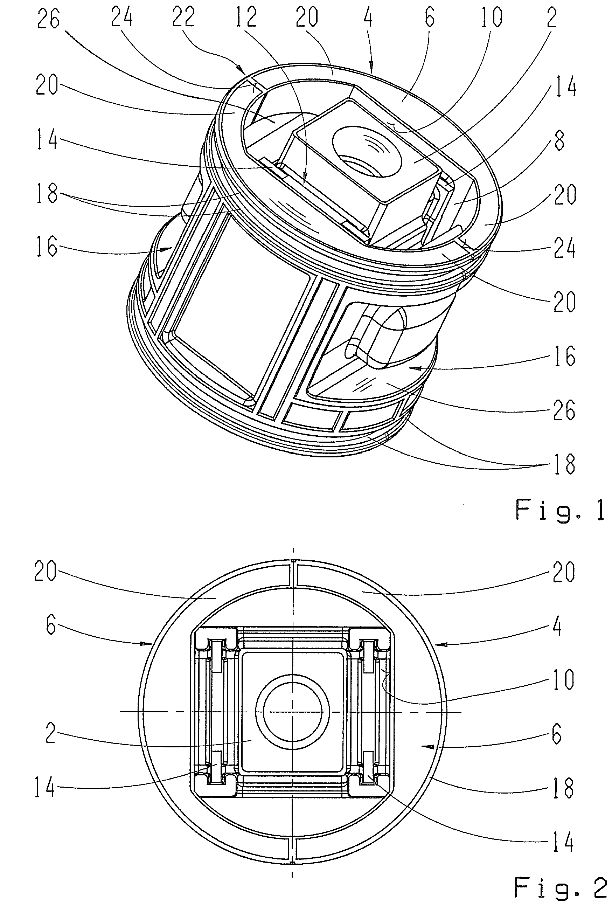

Die perspektivische Darstellung nach Fig. 1 lässt die wesentlichen Teile des gezeigten Ausführungsbeispiels eines Buchsenlagers erkennen. Dieses weist ein mit Bezugszeichen 2 gekennzeichnetes Innenteil auf. Hierbei handelt es sich um ein metallisches Bauteil mit einer Bohrung. Dieses Innenteil 2 wird vollumfänglich von einem mit Bezugszeichen 4 gekennzeichneten Käfig umgeben. Der Käfig 4 ist aus zwei Käfigschalen 6 gebildet, die identisch ausgeformt sind. Die Käfigschalen 6 bilden in ihrem mit Bezugszeichen 8 gekennzeichneten Grund jeweils eine ebene Anlagefläche 10 aus. Auf diese Anlagefläche 10 ist elastisches Material aufvulkanisiert, welches einen sich im Wesentlichen zwischen den ebenen Anlageflächen 10 und den Außenflächen des Innenteils 2 erstreckenden Lagerkörper 12 ausformt. Zwischen den ebenen Anlageflächen 10 und der sich parallel hierzu erstreckenden Außenfläche des Innenteils 2 ist jeweils ein Zwischenblech 14 vorgesehen und in das elastische Material einvulkanisiert.

An der Außenumfangsfläche des Käfigs 4 ist an gegenüberliegenden Umfangsabschnitten jeweils eine Kammer 16 ausgeformt. In axialer Richtung wird jede Kammer 16 an jedem ihrer axialen Enden durch jeweils zwei umlaufende Dichtringe 18 begrenzt. Diese Dichtringe 18 bilden die Abdichtung an der Außenseite der Kammer 16 und des Buchsenlagers. Die umlaufenden Dichtringe 18 sind jedenfalls im Bereich der Kammern 16 an ringsegmentförmigen Schenkeln 20 ausgeformt, die jeweils an den Lagerschalen 6 ausgebildet sind und die in einem Stoßbereich 22 der Käfigschalen 6 dichtend an einander anliegen. Bei dem in den Figuren 1 und zwei gezeigten Ausführungsbeispiel erfolgt diese Abdichtung über elastomeres Material, welches auch den Lagerkörper 12 ausformt und die Käfigschalen 6 jedenfalls an ihren Umfangsflächen überzieht. Dementsprechend sind bei dem in den Figuren 1 und 2 gezeigten Ausführungsbeispiel die Käfigschalen 6 zu einer Einheit gefügt. Das im Stoßbereich 22 vorgesehene Material ist indes so elastisch, dass die Käfigschalen 6 in radialer Richtung relativ zueinander bewegt werden können, um deren Abstand zu verändern. Bei dieser Abstandsveränderung wird der Spannungszustand des Lagerkörpers 12 verändert und dementsprechend das Buchsenlager kalibriert. Diese Kalibrierung führt indes zu keiner erheblichen Verformung des Käfigs 4, da die Käfigschalen 6 im Wesentlichen ihre Ursprungsform beibehalten und lediglich das elastische Material im Stoßbereich 22 elastisch verformt, insbesondere aus dem Stoßbereich 22 herausgedrängt wird. Einander im Stoßbereich 22 gegenüberliegende und durch die ringsegmentförmigen Schenkel 20 stirnseitig ausgeformte Stoßflächen 24 können dementsprechend zur Kalibrierung des Buchsenlagers mit variierendem Abstand zueinander angeordnet werden.

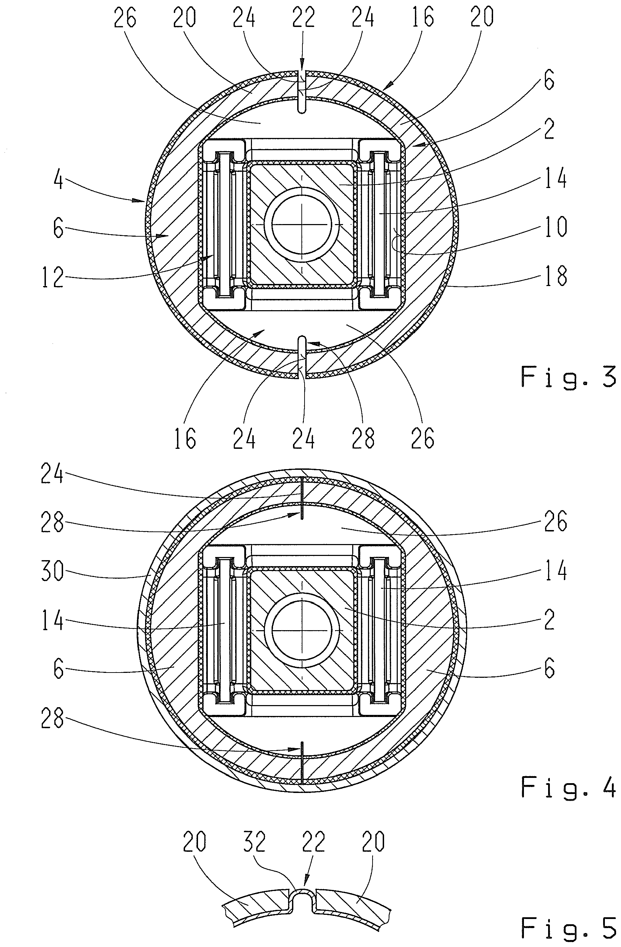

Die Figuren 3 und 4 zeigen ein alternatives Ausführungsbeispiel. Gleiche Elemente sind gegenüber dem zuvor diskutierten Ausführungsbeispiel mit gleichen Bezugszeichen gekennzeichnet.

Die Figuren 3 und 4 zeigen eine Querschnittsansicht oberhalb einer in Figur 1 mit Bezugszeichen 26 gekennzeichneten Kammerabdeckung der Kammer 16, die aus dem den Lagerkörper 12 ausbildenden elastomeren Material geformt ist. Die Kammerabdeckung 26 weist im Stoßbereich eine Schlitz 28 auf. Dieser Schlitz 28 ist in Verlängerung der einander gegenüberliegenden Stoßflächen 24 vorgesehen. Diese Stoßflächen 24 der aus einer Hartkomponente (Metall oder Hartkunststoff) gebildeten Käfigschalen 6 sind nicht mit elastomerem Material bekleidet.

Wie ferner Figur 3 verdeutlicht, reicht die Beschichtung der Käfigschale 6 an dem Außenumfang, d.h. der Dichtring 18 bis zu dem Schlitz 28.

Der Einbauzustand für das in Figur 3 gezeigte Ausführungsbeispiel ist in Figur 4 verdeutlicht. Diese zeigt das Buchsenlager gemäß Figur 3 nach Einbau in ein Außenrohr 30 und nach Kalibrierung. Die beiden Käfigschalen 6 sind radial aufeinander zu bewegt worden, so dass die Stoßflächen 24 nunmehr unmittelbar aneinander anliegen. Der Schlitz 28 ist dementsprechend zusammengepresst, wodurch eine Abdichtung gegenüber der Kammer 16 erfolgt. Am Außenumfang des Käfigs 4 ist der Dichtring 18 umfänglich geschlossen ausgebildet und liegt an der Innenumfangsfläche des Außenrohres 30 dichtend an. Dementsprechend sind die Kammern 16 im Bereich der Kammerabdeckung 26 und am Außenumfang gegenüber dem Außenrohr 30 abgedichtet.

Die Figur 5 zeigt einen Ausschnitt eines weiteren Ausführungsbeispiels und verdeutlicht lediglich die Abdichtung im Stoßbereich 22 für dieses Ausführungsbeispiel. Dieses Ausführungsbeispiel ermöglicht eine relativ große radiale Beweglichkeit einander gegenüberliegender Käfigschalen 6. Diese sind auf ihrer Innenseite mit Elastomermaterial überzogen, welches zwischen den einander gegenüberliegenden Stoßflächen 24 der ringsegmentförmigen Schenkel 20 eine nach außen umbogene U-förmige Falte 32 ausbildet. Die Falte 32 ist lediglich innenumfänglich an den ringsegmentförmigen Schenkeln 20 angebunden. Zwischen den Schenkeln 20 liegt diese frei und erlaubt dementsprechend eine relativ große Beweglichkeit der Käfigschalen 6 in radialer Richtung ohne dass die Abdichtung in Umfangsrichtung verlorengeht.

### Bezugszeichen

- 2: Innenteil
- 4: Käfig
- 6: Käfigschale
- 8: Grund
- 10: ebene Anlagefläche
- 12: Lagerkörper
- 14: Zwischenblech
- 16: Kammer
- 18: Dichtring
- 20: ringsegmentförmiger Schenkel
- 22: Stoßbereich
- 24: Stoßfläche
- 26: Kammerabdeckung
- 28: Schlitz
- 30: Außenrohr
- 32: Falte

## Patentansprüche

1. Buchsenlager zur Aufnahme in einer Außenhülse mit einem sich in axialer Richtung erstreckenden Innenteil (2), einem das Innenteil (2) umgebenden Lagerkörper (12) aus einem elastischen Material mit mindestens zwei Kammern (16) zur Aufnahme eines Dämpfungsmittels und einem den Lagerkörper (12) umfänglich umschließenden Käfig (4), der aus mindestens zwei Käfigteilen (6) gebildet ist, deren Abstand in radialer Richtung veränderbar ist, wobei ein zwischen den Käfigteilen (6) vorgesehener Stoßbereich (22) abgedichtet ist, **dadurch gekennzeichnet, dass** die Käfigteile (6) an gegenüberliegenden axialen Enden und auf Höhe der zwei einander gegenüberliegenden Kammern (16) ringsegmentförmige Schenkel (20) aufweisen, die dichtend zusammenwirken.

2. Buchsenlager nach Anspruch 1, **dadurch gekennzeichnet, dass** die Käfigteile (6) über das den Lagerkörper (12) ausbildende Material relativ beweglich zueinander und miteinander verbunden sind.

3. Buchsenlager nach Anspruch 1 oder 2, **dadurch gekennzeichnet, dass** zumindest eine von im Stoßbereich (22) vorgesehenen Stoßflächen (24) der Käfigteile (6) mit einer Dichtung versehen ist.

4. Buchsenlager nach Anspruch 1 oder 2, **dadurch gekennzeichnet, dass** eine die Kammer (16) abdeckende stirnseitige Kammerabdeckung (26) den Stoßbereich (22) abdichtet.

5. Buchsenlager nach Anspruch 4, **dadurch gekennzeichnet, dass** die Kammerabdeckung (26) im Stoßbereich (22) geschlitzt ausgebildet ist.

6. Buchsenlager nach einem der vorherigen Ansprüche, **gekennzeichnet durch** wenigstens einen den Käfig (4) umfänglich umgebenden Dichtring (18).

7. Buchsenlager nach einem der vorherigen Ansprüche, **dadurch gekennzeichnet, dass** die Kammern (15) im Stoßbereich (22), d.h. an den freien Enden der ringsegmentförmigen Schenkel (20) abgedichtet sind.

## Claims

1. Sleeve bearing for being received in an outer sleeve with an inner part (2) which extends in the axial direction, a bearing body (12) made from an elastic material enclosing the inner part (2) and having at least two chambers (16) for receiving a damping agent and a cage (4) which encloses the bearing body (12) circumferentially and is formed from at least two cage parts (6), the spacing of which is able to be varied in the radial direction, wherein a joint area (22) provided between the cage parts (6) is sealed, **characterised in that** the cage parts (6) have ring segment-shaped legs (20), interacting in a sealing manner, on opposite axial ends and at the height of the two opposing chambers (16).

2. Sleeve bearing according to claim 1, **characterised in that** the cage parts (6) are connected to each other and are able to move relative to each other via the elastic material forming the bearing body (12).

3. Sleeve bearing according to claim 1 or 2, **characterised in that** at least one of the joint surfaces (24) of the cage parts (6) provided in the joint area (22) is provided with a seal.

4. Sleeve bearing according to claim 1 or 2, **characterised in that** a front-side chamber cover (26) which covers the chambers (16) seals the joint area (22).

5. Sleeve bearing according to claim 4, **characterised in that** the chamber cover (26) is slotted in the joint area (22).

6. Sleeve bearing according any one of the preceding claims, **characterised by** at least one sealing ring (18) which encloses the cage (4) circumferentially.

7. Sleeve bearing according to any one of the preceding claims, **characterised in that** the chambers (15) are sealed in the joint area (22), that is to say at the free ends of the ring segment-shaped legs (20).

## Revendications

1. Coussinet destiné à être reçu dans un manchon extérieur avec une partie intérieure (2) s'étendant dans la direction axiale, un corps de palier (12) en matériau élastique entourant la partie intérieure (2) avec au moins deux chambres (16) destinées à recevoir un moyen d'amortissement et avec une cage (4) qui entoure le corps de palier (12) de façon périphérique et qui est formée d'au moins deux parties de cage (6) dont l'espacement peut être modifié dans la direction axiale, une zone de butée (22) prévue entre les parties de cage (6) étant rendue étanche, **caractérisé en ce que** les parties de cage (6) comportent, à des extrémités axiales opposées et à la hauteur de deux chambres (16) se faisant face, des branches (20) en forme de segment de cercle qui coopèrent de façon étanche.

2. Coussinet selon la revendication 1, **caractérisé en ce que** les parties de cage (6) sont raccordées l'une à l'autre de façon mobile l'une par rapport à l'autre par le biais du matériau constituant le corps de palier (12).

3. Coussinet selon la revendication 1 ou 2, **caractérisé en ce qu'**au moins une des surfaces de butée (24) des parties de cage (6) prévues dans la zone de butée (22) est munie d'un joint d'étanchéité.

4. Coussinet selon la revendication 1 ou 2, **caractérisé en ce qu'**une couverture de chambre (26) côté frontal recouvrant la chambre (16) assure l'étanchéité de la zone de butée (22).

5. Coussinet selon la revendication 4, **caractérisé en ce que** la couverture de chambre (26) est constituée de façon fendue dans la zone de butée (22).

6. Coussinet selon l'une des revendications précédentes, **caractérisé par** au moins une bague d'étanchéité (18) entourant la cage (4) de façon périphérique.

7. Coussinet selon l'une des revendications précédentes, **caractérisé en ce que** les chambres (15) sont rendues étanches dans la zone de butée (22), c'est-à-dire aux extrémités libres des branches (20) en forme de segment de cercle.
